# EUROPÄISCHE PATENTANMELDUNG

(11) **EP 0 962 279 A2**
(43) Veröffentlichungstag der Anmeldung: **08.12.1999**
(21) Anmeldenummer: 99106867.7
(22) Anmeldetag: 07.04.1999
(51) Int. Cl.: B23Q 1/72, B23Q 11/00, B23Q 1/26

(54) **Werkzeugmaschine und Verfahren zur Bearbeitung eines Werkstücks**

(30) Priorität: 04.06.1998 DE 19824963
(71) Anmelder: CHIRON-WERKE GMBH & CO. KG, 78532 Tuttlingen (DE)
(72) Erfinder: Winkler, Hans-Henning, Dr.-Ing., 78532 Tuttlingen (DE); Schweizer, Anton, 78573 Wurmlingen (DE)
(74) Vertreter: Otten, Hajo, Dr.-Ing.

(57) **Zusammenfassung**

Die Erfindung betrifft eine Werkzeugmaschine (10) zur Bearbeitung eines Werkstücks (80), mit einer Spindel (52), einer Werkstückeinspanneinrichtung (78) zum Einspannen des Werkstücks, und einem Werkzeughalter (40, 42) zur Aufnahme eines Bearbeitungswerkzeugs (46). Die Erfindung ist dadurch gekennzeichnet, daß die Werkstückeinspanneinrichtung (78) mit der Spindel (52) verbunden und der Werkzeughalter (40, 42) unter der Werkstückeinspanneinrichtung (78) angeordnet ist. Die Erfindung betrifft ferner ein Verfahren zur Bearbeitung von Werkstücken mit einer Werkzeugmaschine, wobei das Werkstück so in der Werkzeugmaschine eingespannt wird, daß die zu bearbeitende Werkstückfläche nach unten zeigt und in dieser Lage bearbeitet wird, so daß die bei der Bearbeitung anfallenden Späne nach unten und damit aus dem Bearbeitungsbereich heraus fallen

## Beschreibung

Die Erfindung betrifft eine Werkzeugmaschine zur Bearbeitung eines Werkstücks, mit einer Spindel, einer Werkstückeinspanneinrichtung zum Einspannen des Werkstücks, und einem Werkzeughalter zur Aufnahme eines Bearbeitungswerkzeugs, Ferner betrifft die Erfindung ein Verfahren zur Bearbeitung von Werkstücken mit einer Werkzeugmaschine.

Werkzeugmaschinen der vorgenannten Art sind allgemein bekannt. Sie umfassen üblicherweise eine motorbetriebene Spindel, die an einem Längsende eine Werkzeugaufnahme besitzt. In diese Werkzeugaufnahme ist ein ein Bearbeitungswerkzeug aufnehmender Werkzeughalter lösbar einsetzbar. Das zu bearbeitende Werkstück läßt sich in einer Werkstückeinspanneinrichtung einspannen, die unter der Werkzeugaufnahme bzw. unter dem Werkzeughalter starr oder auf einem verlagerbaren Tisch angeordnet ist. Damit zeigt die zu bearbeitende Werkstückfläche nach oben und das Bearbeitungswerkzeug muß zur Bearbeitung nach unten zugestellt werden.

Sehr häufig müssen in die Werkstücke Nuten eingefräst werden, die eng benachbart zueinander angeordnet sind und lediglich durch dünne Wände voneinander getrennt sind. Derartige Nuten sind bspw. bei einem sogenannten G-Lader in ein massives Werkstück einzubringen. Hierbei entsteht jedoch das Problem, daß sich am Nutengrund Bearbeitungsspäne sammeln. Diese Späne können unter Umständen die Wandoberflächen der Nuten beschädigen. Ferner können sich die Späne verklemmen und die sehr dünnen Nutenwände wegdrücken, so daß im schlimmsten Fall ein Ausschußteil entsteht. Auch das Einblasen von Luft schafft kaum Abhilfe, da der Nutengrund durch das Bearbeitungswerkzeug abgedeckt wird, so daß der Luftstrom dort nur in geringem Umfang ankommt und die Späne nicht aus der Nut austreten können.

Vor diesem Hintergrund liegt der Erfindung die Aufgabe zugrunde, eine Werkzeugmaschine der eingangs genannten Art so weiterzubilden, daß die Bearbeitungsqualität, insbesondere bei der Herstellung von durch nur dünne Wände getrennte Nuten, insbesondere G-Ladern erhöht wird, ohne jedoch die konstruktiv notwendigen Maßnahmen zu sehr zu erhöhen, und damit die Werkzeugmaschine zu verteuern.

Die der Erfindung zugrundeliegende Aufgabe wird durch eine Werkzeugmaschine der eingangs genannten Art gelöst, bei der die Werkstückeinspanneinrichtung mit der Spindel verbunden und der Werkzeughalter unter der Werkstückeinspanneinrichtung angeordnet ist.

Die der Erfindung zugrundeliegende Aufgabe wird dadurch vollkommen gelöst.

Dadurch, daß der Werkzeughalter unter der Werkstückeinspanneinrichtung angeordnet ist, läßt sich das Werkstück von unten bearbeiten, d.h. die zu bearbeitende Werkstückfläche zeigt nach unten. Damit wird erreicht, daß die entstehenden Späne bei der Bearbeitung der Schwerkraft folgend nach unten aus dem "hängenden" Werkstück und damit aus dem Bearbeitungsbereich herausfallen. Es läßt sich also mit einfachen konstruktiven Maßnahmen vermeiden, daß sich Späne am Nutengrund sammeln.

In einer bevorzugten Weiterbildung der Erfindung umfaßt die Werkstückeinspanneinrichtung einen mit der Spindel verbundenen Spannblock und zumindest zwei, vorzugsweise drei Spannbacken, die quer zur Spindel-Längsrichtung verstellbar an dem Spannblock angeordnet sind, Vorzugsweise umfaßt die Werkstückeinspanneinrichtung dabei eine Stange, die relativ zur Spindel verstellbar angeordnet und mit den Spannbacken gekoppelt ist, wobei weiter vorzugsweise die Stange innerhalb der Spindel konzentrisch angeordnet ist. Vorzugsweise sind ferner an dem dem Spannblock zugewandten Ende der Stange Hebelelemente angelenkt, die jeweils mit einer Spannbacke verbunden sind.

Dies hat den Vorteil, daß die üblichen Spindeln, die über ein Spannsystem zum Festhalten des Werkzeughalters verfügen, nur geringfügig abgeändert werden müssen. Das bisherige Spannsystem für den Werkzeughalter, das bspw. eine verstellbare Spindelstange umfaßt, läßt sich zur Betätigung der Stange und damit der Spannbacken einsetzen. Die vertikale Bewegung der Stange innerhalb der Spindel wird mit einfachen Mitteln über die Hebelelemente in eine horizontale Bewegung der Spannbacken umgesetzt.

In einer bevorzugten Weiterbildung der Erfindung weist der Spannblock zumindest einen Innenkanal zur Führung von Spülflüssigkeit auf, der in einen der Werkstückauflage zugewandten Bereich mündet.

Dies hat den Vorteil, daß mit einfachen Mitteln eine Auflagenspülung erzielbar ist, die zum Säubern der Auflagefläche zwischen Spannbock und Werkstück sorgt, so daß das Werkstück plan aufliegt und damit eine maßgenaue Bearbeitung zuläßt.

In einer weiteren Weiterbildung ist es bevorzugt, wenn der Spannblock einen Werkstücksensor aufweist, wobei der Werkstücksensor vorzugsweise als Luftsensor ausgebildet ist und einen Luftkanal umfaßt, der den Spannblock durchsetzt und in den Bereich der Werkstückauflage mündet.

Hier ist von Vorteil, daß auf einfache Weise überprüft werden kann, ob ein Werkstück eingespannt ist. Dadurch können z.B. Fehlfunktionen der Werkstückeinspanneinrichtung während des Betriebes erfaßt und von der Steuerung berücksichtigt werden.

In einer ferner bevorzugten Weiterbildung der Erfindung ist der Spindel ein Servo-Motor mit hohem Drehmoment zugeordnet, wobei vorzugsweise ein Untersetzungsgetriebe vorgesehen ist.

Die Verwendung eines Untersetzungsgetriebes hat den Vorteil, daß zur Erzielung des notwendigen hohen Drehmoments zur Bewegung des Werkstücks, bspw. in einer spiralförmigen Bahn, ein handelsüblicher Motor einsetzbar ist, der eine hohe Drehzahl bei geringem Drehmoment erreicht, wobei das Untersetzungsgetriebe die Drehzahl bspw. um einen Faktor 10 verringert.

In einer bevorzugten Weiterbildung der Erfindung ist die Spindel dreidimensional verlagerbar und um zumindest eine Rotationsachse drehbar angeordnet.

Dies hat den Vorteil, daß die Werkzeugmaschine auch zur Herstellung komplizierter Formen, bspw. die bei den vorgenannten G-Ladern erforderlichen spiralförmig verlaufenden Nuten, geeignet ist.

In einer bevorzugten Weiterbildung der Erfindung ist dem Werkzeughalter ein Motor zugeordnet, der eine hohe Drehzahl ermöglicht.

Dabei ist es bevorzugt, wenn der Werkzeughalter um eine Achse schwenkbar angeordnet ist, wobei die Achse quer zur Spindel-Längsachse verläuft.

Diese Verschwenkbarkeit erhöht nochmals die Flexibilität der Werkzeugmaschine und dient insbesondere dazu, das Bearbeitungswerkzeug senkrecht zur Oberfläche des Werkstücks zu positionieren.

Ferner ist es bevorzugt, wenn die Spindel eine Spannzangeneinrichtung umfaßt, die über eine innerhalb der Spindel verstellbar angedeutete Spindelstange die Stange in einer Stellung verriegelt.

Dies hat den Vorteil, daß die Spannbacken in ihrer Spannposition mit einfachen Mitteln verriegelt werden können. Insbesondere liegt der Vorteil darin, daß bei den bisher eingesetzten Spindeln diese Spannzangeneinrichtung bereits vorhanden ist.

In einer bevorzugten Weiterbildung ist dem Werkzeughalter zumindest ein Ablenkelement zugeordnet, das die der Schwerkraft folgend vom Werkstück nach unten fallenden Bearbeitungsspäne von dem Werkzeughalter wegfährt.

Dies hat den Vorteil, daß mit konstruktiv einfachen Mitteln verhindert wird, daß Späne bspw. den Werkzeughalter verschmutzen und dadurch möglicherweise beschädigen.

Allgemein ist es noch bevorzugt, wenn die Werkzeugmaschine zwei Spindeln und zwei Werkzeughalter aufweist.

Dies hat den Vorteil, daß zwei Werkstücke gleichzeitig bearbeitet werden können, wobei vorzugsweise die beiden Spindeln und die beiden Werkzeughalter jeweils starr miteinander verbunden sind. Dies hat den weiteren Vorteil, daß sich jeweils zwei exakt übereinstimmende Werkstücke herstellen lassen, was insbesondere dann von großem Interesse ist, wenn die beiden Werkstücke zueinander passen müssen, wie dies bspw. bei dem vorgenannten G-Lader der Fall ist.

Die der Erfindung zugrundeliegende Aufgabe wird auch durch ein Verfahren der eingangs genannten Art gelöst, das sich dadurch auszeichnet, daß das Werkstück so in der Werkzeugmaschine eingespannt wird, daß die zu bearbeitende Werkstückfläche nach unten zeigt und in dieser Lage bearbeitet wird, so daß die bei der Bearbeitung anfallenden Späne nach unten und damit aus dem Bearbeitungsbereich herausfallen.

Dieses Verfahren hat den bereits oben im Zusammenhang mit der neuen Werkzeugmaschine diskutierten Vorteil, daß sich im Bearbeitungsbereich, insbesondere am Nutengrund, keine Späne ansammeln können, die zu einer Beschädigung des Werkstücks führen würden.

Weitere Vorteile und Merkmale der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand zweier Ausführungsbeispiele mit Bezug auf die beiliegenden Zeichnungen näher erläutert. Dabei zeigen:
- Fig. 1: eine schematische perspektivische Ansicht einer erfindungsgemäßen Werkzeugmaschine,
- Fig. 2: eine schematische Schnittdarstellung einer in der Werkzeugmaschine aus Fig. 1 verwendeten Spindel, und
- Fig. 3: eine schematische perspektivische Darstellung einer Werkzeugmaschine gemäß einem zweiten Ausführungsbeispiel.

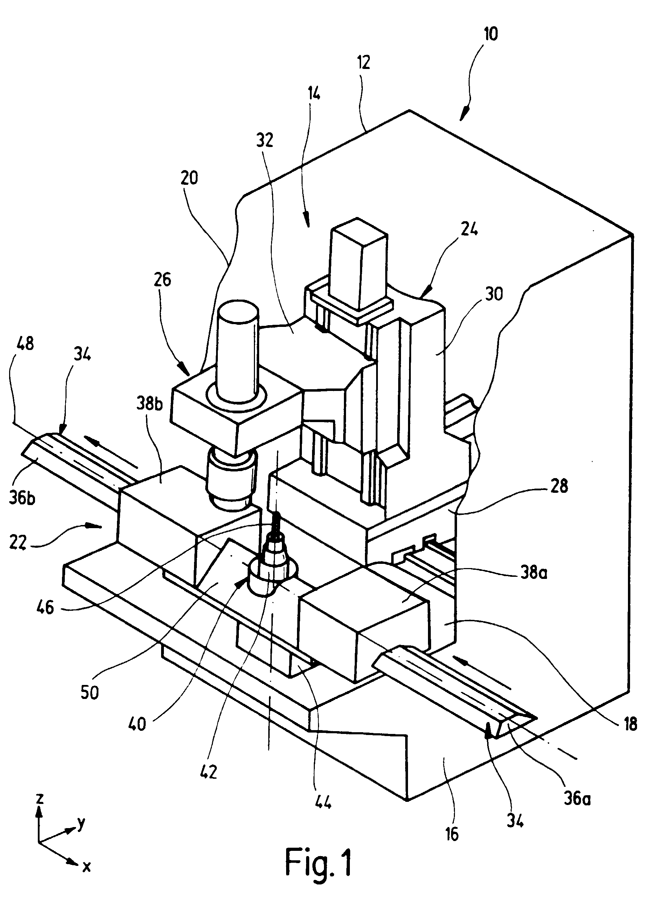

In Fig. 1 ist eine Werkzeugmaschine mit dem Bezugszeichen 10 gekennzeichnet. Die Werkzeugmaschine 10 umfaßt ein nur schematisch angedeutetes Gehäuse 12, das einen Bearbeitungsbereich 14 umschließt. Um ein zu bearbeitendes Werkstück in den Bearbeitungsbereich 14 zu transportieren, weist das Gehäuse 12 an seiner in Fig. 1 rechten Gehäuseseite 16 eine schematisch angedeutete Öffnung 18 auf. Gleichermaßen ist auf der gegenüberliegenden linken Gehäuseseite 20 eine entsprechende Öffnung 22 zum Austransport des bearbeiteten Werkstücks vorgesehen. Unten links in Fig. 1 ist noch ein Koordinatenkreuz angedeutet.

Im Bearbeitungsbereich 14 ist ein Spindelkopf 24 vorgesehen, der üblicherweise ein Bearbeitungswerkzeug, hier jedoch einen bei 26 angedeuteten Werkstückträger trägt. Der Spindelkopf 24 umfaßt eine in x-Richtung verfahrbare Schlitteneinheit 28, eine in y-Richtung verfahrbare Schlitteneinheit 30 und eine in z-Richtung verfahrbare Schlitteneinheit 32, an der der Werkstückträger 26 angebracht ist. Alle drei Schlitteneinheiten 28, 30, 32 sind jeweils auf nicht oder nur schematisch dargestellten Schienen verschiebbar gelagert. Der Spindelkopf 24 ermöglicht durch die drei Schlitteneinheiten 28, 30, 32 eine Verlagerung des Werkstückträgers 26 in drei Dimensionen. Der Aufbau eines solchen Spindelkopfes 24 ist allgemein bekannt, so daß auf dessen detaillierte Beschreibung verzichtet werden kann.

Die Werkzeugmaschine 10 umfaßt des weiteren eine Transporteinrichtung 34, die einerseits der Zuführung von Werkstücken in den Bearbeitungsbereich 14 und andererseits dem Abtransport der bearbeiteten Werkstücke dient. Die Transporteinrichtung 34 weist hierfür jeweils an den Gehäuseseiten 16, 20 vorgesehene, in x-Richtung verlaufende Schienen 36a, 36b auf, die in Fig. 1 lediglich schematisch angedeutet sind. Auf diesen Schienen 36a, 36b laufen Transportschlitten 38a, 38b, die in Fig. 1 ebenfalls nur schematisch angedeutet sind. Zwischen den im Bearbeitungsbereich 14 liegenden Enden der beiden Schienen 36a, 36b ist eine Werkzeugeinrichtung 40 vorgesehen, die einen Werkzeughalter 42 und einen Motor 44 umfaßt. Der Werkzeughalter 42 dient zur Aufnahme eines Bearbeitungswerkzeugs 46, bspw. eines Schaftfräsers, das über den Motor 44 angetrieben wird. Die Werkzeugeinrichtung 40 ist innerhalb des Bearbeitungsbereichs 14 so angeordnet, daß die Längsachse des Bearbeitungswerkzeugs 46 sich im wesentlichen in z-Richtung, d.h. vertikal erstreckt. Um die Flexibilität der Werkzeugmaschine 10 zu erhöhen, ist zumindest der Werkzeughalter 42 mit dem Bearbeitungswerkzeug 46 um eine in x-Richtung verlaufende Achse 48 und/oder eine in y-Richtung verlaufende Achse schwenkbar, wobei der zum Schwenken notwendige Antrieb in Fig. 1 der Übersichtlichkeit halber nicht dargestellt ist.

Die Werkzeugeinrichtung 40 umfaßt im Ausführungsbeispiel der Fig. 1 zwei Ableitbleche 50, die jeweils schräg zur x-y-Ebene derart verlaufen, daß sie quasi ein Spitzdach bilden, dessen First nach oben zeigt. Wie sich aus der Fig. 1 noch ergibt, ist in die beiden Leitbleche eine Öffnung eingebracht, die der Werkzeughalter 42 durchgreift. Die beiden Ableitbleche dienen dazu, nach unten fallende Bearbeitungsspäne gezielt abzuführen und insbesondere die Werkzeugeinrichtung 40 vor Verschmutzung zu schützen.

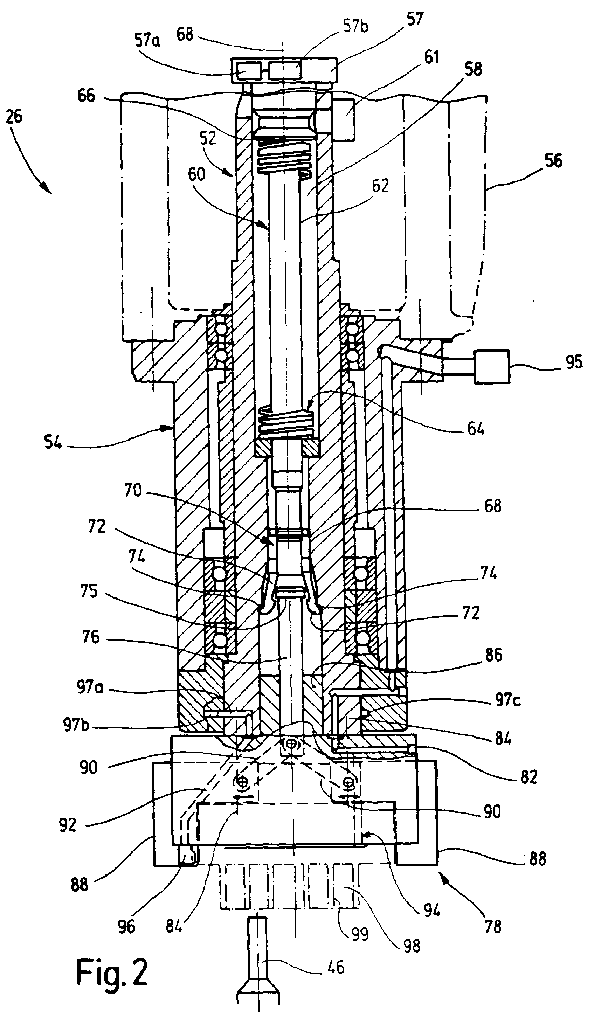

Der Werkstückträger 26 soll nun mit Bezug auf die Fig. 2 erläutert werden.

Der Werkzeugträger 26 umfaßt eine übliche, auch Hauptspindel genannte Spindel 52, die in an sich bekannter Weise in einem Spindelgehäuse 54 drehbar gelagert ist. Das Spindelgehäuse 54 ist mit einem nur angedeuteten Trägerrahmen 56 verbunden, der seinerseits mit der Schlitteneinheit 32 verbunden ist. Die im Querschnitt kreisförmige Spindel 52 durchgreift das Spindelgehäuse 54 vollständig, wobei das obere Spindelende mit einer Antriebseinheit 57 verbunden ist. Diese in der Figur rein schematisch dargestellte Antriebseinheit 57 umfaßt vorzugsweise einen Wechselstrom-Motor 57a und ein Untersetzungsgetriebe 57b, so daß eine Drehzahl im Bereich von 300 U/min bei einem Drehmoment von zumindest 200 Nm erzielbar ist. Vorzugsweise ist der Motor 57a als Servo-Motor ausgelegt.

Die Spindel 52 weist eine konzentrische gestufte Bohrung 58 auf, die in Längsrichtung unterschiedliche Durchmesser besitzt. Die Bohrung 58 dient zur Aufnahme einer auch als Spannstange bezeichneten Spindelstange 60, die in der Bohrung 58 in Längsrichtung verlagerbar gehalten ist. Das zur Verlagerung der Spindelstange 60 notwendige Antriebsaggregat ist in der Figur rein schematisch gezeigt und mit der Bezugsziffer 61 gekennzeichnet.

Ein Längsabschnitt 62 der Spindelstange 60 ist von einem Federpaket 64 umgeben, das sich einerseits an der Spindel 52 und andererseits an einer Anlagefläche 66 abstützt, die fest mit der Spindelstange 60 verbunden ist. Die Feder 64 ist so ausgelegt, daß sie die Spindelstange 60 nach oben in eine Grundstellung zwingt. Die in Fig. 2 gezeigte Spindelstange 60 ist aus der Grundstellung um eine bestimmte Strecke nach unten verstellt.

Die Spindelstange 60 weist an ihrem unteren Ende 68 eine Spannvorrichtung 70 auf, die über mehrere Spannzangen 72 verfügt, wobei in der Fig. 2 der Übersichtlichkeit halber nur zwei solcher Spannzangen 72 dargestellt sind. Diese Spannzangen 72 wirken mit einem konischen Längsabschnitt 74 der Bohrung 58 derart zusammen, daß die Spannzangen 72 bei einer Verlagerung der Spindelstange 60 nach oben nach innen, d.h. zur Längsachse 68 hin gedrückt werden. Die Spannzangen 72 weisen jeweils eine innenliegende im wesentlichen horizontale Fläche 74 auf, die zur Verriegelung mit einer entsprechenden Anschlagfläche zusammenwirkt.

Eine solche Anschlagfläche 75 ist oben an einer Stange 76 angebracht, deren Längsachse mit der Längsachse 68 der Spindelstange 60 zusammenfällt. Die Stange 76 ist Teil einer Werkstückeinspannvorrichtung 78, die zum Einspannen eines in der Fig. 2 strichpunktiert angedeuteten Werkstücks 80 dient.

Die Werkstückeinspannvorrichtung 78 umfaßt ferner einen Spannblock 82, der flanschartig am unteren Ende der Spindel 52 angebracht ist. Die Verschraubung des Spannblocks 82 an der Spindel 52 ist durch strichpunktierte Linien 84 angedeutet. Wie Fig. 2 erkennen läßt, ragt ein Längsabschnitt 86 des Spannblocks 82 in die Bohrung 58 der Spindel 52 hinein. In diesem Längsabschnitt 86 ist eine Bohrung vorgesehen, die auch die Stange 76 vollständig durchgreift.

Die Werkstückeinspannvorrichtung 78 umfaßt vorzugsweise drei Spannbacken 88, die am Spannblock 82 in horizontaler Richtung verlagerbar angeordnet sind, derart, daß die Spannbacken 88 zum Einspannen des Werkstücks 80 zur Längsachse 68 hin bewegt werden können. Die Spannbacken 88 werden jeweils mit einer Federkraft beaufschlagt, die die Spannbacken von der Längsachse 68 weg in die geöffnete Stellung zwingt. Der Aufbau des Spannblocks 82 und der Spannbacken 88 entspricht dabei dem eines bekannten Dreibackenfutters. Selbstverständlich sind zum Festhalten des Werkstücks 80 auch andere Spann- oder Greifermittel denkbar.

An dem dem Werkstück 80 zugewandten Ende der Stange 76 sind Hebel 90 drehbar angelenkt, wobei die Hebel 90 mit ihrem anderen Ende jeweils an einer Spannbacke 88 angelenkt sind. Die über die Hebel 90 erzielte Kopplung der Stange 76 mit den Spannbacken 88 dient dazu, eine vertikale Bewegung der Stange 76 in eine horizontale Bewegung der Spannbacken 88 umzusetzen. Damit ist es also möglich, durch Verlagern der Stange 76 die Spannbacken 88 zu bewegen und das Werkstück 80 einzuspannen. In der eingespannten Stellung wird die Stange 76 durch die Spannzangen 72 verriegelt. Durch das Antriebsaggregat 61 ist es möglich, das Öffnen und Schließen der Werkstückeinspannvorrichtung 78, d.h. der Spannbacken 88 automatisch durchzuführen.

Der Spannblock 82 wird in Längsrichtung von einem ersten Kanal 92 und einem zweiten Kanal 94 durchsetzt. Der erste Kanal 92 mündet an der Unterseite des Spannblocks 82 in eine Düse 96, die zum Werkstück 80 hin gerichtet ist. Über einen entsprechenden in der Spindel 52 und dem Spindelgehäuse 55 vorgesehenen Kanal 97a bzw. 97b wird die Düse 96 mit einer Spülflüssigkeit versorgt, um die Auflagefläche zwischen Werkstück 80 und Spannbacken 88 bzw. Spannblock 82 zu reinigen. Die Verbindung zwischen dem im Spindelgehäuse vorgesehenen Kanal 97b und dem in der Spindel vorgesehenen Kanal 97a erfolgt über einen Ringkanal 97c.

Der in einen Auflagebereich von Werkstück und Spannblock mündende zweite Kanal 94 ist über entsprechende Kanäle in der Spindel 52 und im Spindelgehäuse 54 mit einem in der Fig. 2 rein schematisch dargestellten Luftsensor 95 verbunden. Mit Hilfe dieses Luftsensors 95 ist es bspw. durch Erfassen von Luftdruckänderungen in dem Kanal 94 möglich, zu prüfen, ob ein Werkstück 80 eingespannt ist.

Neben der in Fig. 2 gezeigten Düse 96 können weitere Düsen vorgesehen sein, so daß die gesamte Auflagefläche mit Spülflüssigkeit erreichbar ist.

Wie bereits in bezug auf Fig. 1 beschrieben, ist der Werkzeughalter mit dem Bearbeitungswerkzeug 46 unter dem Werkstückträger 26 angeordnet. Dies ermöglicht eine Bearbeitung der unteren Fläche des hängenden Werkstücks 80. In Fig. 2 sind Nuten 98 zu erkennen, die über dünne Wände 99 voneinander getrennt sind. Vorzugsweise handelt es sich um eine einzige Nut, die in der x-y-Ebene spiralförmig verläuft. Ein solcher Nutenverlauf ist bspw. bei sogenannten G-Ladern notwendig.

Die Bearbeitung eines solchen Werkstücks 80 wird nun wie folgt durchgeführt:

Zunächst wird das unbearbeitete Werkstück 80 über den Transportschlitten 38a in den Bearbeitungabereich 14 transportiert. Der Werkzeugträger 26 wird über die entsprechenden Schlitteneinheiten 28, 30, 32 verfahren und so positioniert, daß er direkt über dem Werkstück liegt. Anschließend wird der Werkstückträger 26 nach unten verlagert, wobei zum Einspannen des Werkstücks 80 die Werkstückeinspannvorrichtung 78 betätigt wird. Hierzu wird die Stange 76 über die Spannzangen 72 gegriffen und durch Verstellen der Spindelstange 60 nach oben gezogen. Nachdem die Stange 76 über die Spannzangen 72 verriegelt ist, wird der Werkzeugträger 26 in Richtung der Werkzeugeinrichtung 40 in die Startposition verfahren. Die zuvor erwähnten spiralförmigen Nuten werden in mehreren Durchläufen schichtweise eingebracht, indem das eingespannte Werkstück 80 einerseits um die Längsachse 68 gedreht und andererseits in x- und y-Richtung verfahren wird, um so "über" dem Werkzeug die gewünschte Spirale "abzufahren". Sofern die Unterseite des Werkstücks 80 nicht parallel zur x-y-Ebene liegt, läßt sich zur Kompensation das Bearbeitungswerkzeug 46 um die x-Achse oder um die y-Achse verschwenken. Während der Bearbeitung wird dann das "stehende" Werkzeug 46 durch den Motor 44 angetrieben.

Dadurch, daß das Bearbeitungswerkzeug unterhalb der zu bearbeitenden Fläche liegt, fallen die entstehenden Bearbeitungsspäne bedingt durch die Schwerkraft nach unten und damit aus den Nuten heraus. Damit wird wirkungsvoll erreicht, daß sich am Nutengrund keine Späne mehr sammeln, so daß die Gefahr eines Umbiegens der relativ dünnen Wände 99 bzw. eine Beschädigung der Wandoberfläche verringert wird.

Der Spindelkopf 24 transportiert das Werkstück 80 nach dessen Bearbeitung zu dem zweiten Transportschlitten 38b, der das bearbeitete Werkstück aus der Werkzeugmaschine 10 in einen nachgeordneten Bereich fördert.

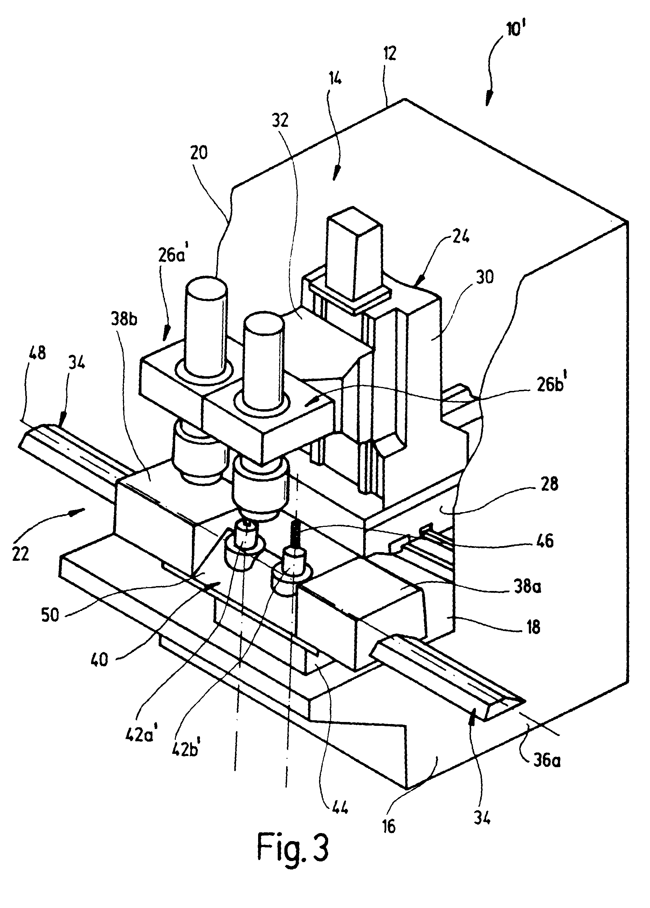

In Fig. 3 ist eine Werkzeugmaschine 10' dargestellt, die im wesentlichen der mit Bezug auf die Fig. 1 bereits beschriebenen Werkzeugmaschine 10 entspricht. Zur Vereinfachung sind übereinstimmende Teile mit den gleichen Bezugszeichen gekennzeichnet, so daß auf deren nochmalige Beschreibung verzichtet werden kann.

Im Unterschied zu der in Fig. 1 gezeigten Werkzeugmaschine 10 weist die Werkzeugmaschine 10' eine Doppelspindel und zwei Werkzeugträger 26a', 26b' auf, die beide starr an der in z-Richtung verfahrbaren Schlitteneinheit 32 angebracht sind. Der Aufbau der beiden Werkzeugträger 26a', 26b' entspricht dem mit Bezug auf die Fig. 2 beschriebenen Werkzeugträger 26, so daß hierauf Bezug genommen wird. Zur gleichzeitigen Bearbeitung zweier Werkstücke ist auch der in Fig. 1 gezeigte Werkzeughalter 42 durch zwei identisch aufgebaute Werkzeughalter 42a' und 42b' ersetzt. Auch deren Aufbau entspricht dem Aufbau des bereits beschriebenen Werkzeughalters 42.

Mit dieser Werkzeugmaschine 10' ist das bereits beschriebene Verfahren zur Bearbeitung von Werkstücken durchführbar, wobei zwei Werkstücke gleichzeitig bearbeitet werden können.

Es zeigt sich, daß die durch die erfindungsgemäße Werkzeugmaschine realisierte "über Kopf"-Bearbeitung des Werkstücks deutliche Vorteile im Hinblick auf die Bearbeitungsqualität ermöglicht. Diese Verbesserung der Bearbeitungsqualität wird jedoch nicht mit einem höheren konstruktiven Aufwand erkauft, da weiterhin Standardteile verwendet werden können. Die erfindungsgemäße Spindel 52 unterscheidet sich nämlich gegenüber der bisher verwendeten Spindel lediglich dadurch, daß statt einem Werkzeughalter die Werkstückeinspannvorrichtung 78 eingesetzt wird. Sowohl die Spindelstange 60 als auch die Spannvorrichtung 70 mit den Spannzangen 72 können unverändert bleiben.

## Patentansprüche

1. Werkzeugmaschine zur Bearbeitung eines Werkstücks (80), mit einer Spindel (52), einer Werkstückeinspanneinrichtung (78) zum Einspannen des Werkstücks, und einem Werkzeughalter (40, 42) zur Aufnahme eines Bearbeitungswerkzeugs (46), dadurch gekennzeichnet, daß die Werkstückeinspanneinrichtung (78) mit der Spindel (52) verbunden und der Werkzeughalter (40, 42) unter der Werkstückeinspanneinrichtung (78) angeordnet ist.

2. Werkzeugmaschine nach Anspruch 1, dadurch gekennzeichnet, daß die Werkstückeinspanneinrichtung (78) einen mit der Spindel (52) verbundenen Spannblock (82) und zumindest zwei, vorzugsweise drei Spannbacken (88) umfaßt, die quer zur Spindel-Längsrichtung verstellbar an dem Spannblock (82) angeordnet sind.

3. Werkzeugmaschine nach Anspruch 2, dadurch gekennzeichnet, daß die Werkstückeinspanneinrichtung eine Stange (76) umfaßt, die relativ zur Spindel (52) verstellbar angeordnet und mit den Spannbacken (88) gekoppelt ist.

4. Werkzeugmaschine nach Anspruch 3, dadurch gekennzeichnet, daß die Stange (76) innerhalb der Spindel (52) und konzentrisch zu dieser angeordnet ist.

5. Werkzeugmaschine nach Anspruch 3, dadurch gekennzeichnet, daß an dem dem Spannblock (82) zugewandten Ende der Stange (76) Hebelelemente (90) angelenkt sind, die jeweils mit einer Spannbacke (88) verbunden sind.

6. Werkzeugmaschine nach Anspruch 2, dadurch gekennzeichnet, daß der Spannblock (82) zumindest einen Innenkanal (92) zur Führung von Spülflüssigkeit aufweist, der in einem der Werkstückauflage zugewandten Bereich mündet.

7. Werkzeugmaschine Anspruch 2, dadurch gekennzeichnet, daß der Spannblock (82) einen Werkstücksensor (94, 95) aufweist.

8. Werkzeugmaschine nach Anspruch 7, dadurch gekennzeichnet, daß der Werkstücksensor (94) als Luftsensor (95) ausgebildet ist und einen Luftkanal (94) umfaßt, der den Spannblock (82) durchsetzt und im Bereich der Werkstückauflage mündet.

9. Werkzeugmaschine nach einem der vorhergehenden Ansprüche, dadurch gekennzeichnet, daß der Spindel (52) ein Servo-Motor (57a) mit hohem Drehmoment zugeordnet ist.

10. Werkzeugmaschine nach Anspruch 9, dadurch gekennzeichnet, daß dem Servo-Motor (57a) ein Untersetzungsgetriebe (57b) zugeordnet ist.

11. Werkzeugmaschine nach einem der vorhergehenden Ansprüche, dadurch gekennzeichnet, daß dem Werkzeughalter (42) ein Motor (44) zugeordnet ist, der eine hohe Drehzahl ermöglicht.

12. Werkzeugmaschine nach einem der vorhergehenden Ansprüche, dadurch gekennzeichnet, daß die Spindel (52) dreidimensional bewegbar und um zumindest eine Rotationsachse drehbar angeordnet ist.

13. Werkzeugmaschine nach einem der vorhergehenden Ansprüche, dadurch gekennzeichnet, daß der Werkzeughalter (42; 42a', 42b') um eine Achse (48) schwenkbar angeordnet ist, wobei die Achse quer zur Spindel-Längsachse (68) verläuft.

14. Werkzeugmaschine nach einem der vorhergehenden Ansprüche, dadurch gekennzeichnet, daß die Spindel (52) eine Spannzangeneinrichtung (72) umfaßt, die über eine innerhalb der Spindel (52) in Längsrichtung verstellbar angeordnete Spindelstange (60) betätigbar ist, um die Stange (76) in einer Stellung zu verriegeln.

15. Werkzeugmaschine nach einem der vorhergehenden Ansprüche, dadurch gekennzeichnet, daß dem Werkzeughalter (42; 42a', 42b') zumindest ein Ablenkelement (50) zugeordnet ist, das die der Schwerkraft folgend vom Werkstück (80) nach unten fallenden Berarbeitungsspäne von dem Werkzeughalter (42; 42a', 42b') wegführt.

16. Werkzeugmaschine nach einem der vorhergehenden Ansprüche, dadurch gekennzeichnet, daß sie zur Herstellung eng benachbart angeordneter Nuten (98) ausgebildet ist, wobei die Nuten (98) vorzugsweise spiralförmig verlaufen.

17. Werkzeugmaschine nach einem der vorhergehenden Ansprüche, dadurch gekennzeichnet, daß zwei Spindeln (52) und zwei Werkzeughalter (42a', 42b') vorgesehen sind, so daß zwei Werkstücke gleichzeitig bearbeitet werden können.

18. Verfahren zur Bearbeitung von Werkstücken mit einer Werkzeugmaschine, dadurch gekennzeichnet, daß das Werkstück so in der Werkzeugmaschine eingespannt wird, daß die zu bearbeitende Werkstückfläche nach unten zeigt und in dieser Lage bearbeitet wird, so daß die bei der Bearbeitung anfallenden Späne nach unten und damit aus dem Bearbeitungsbereich herausfallen.
